# EUROPEAN PATENT APPLICATION

(11) **EP 2 311 784 A1**
(43) Date of publication of application: **20.04.2011**
(21) Application number: 10010543.6
(22) Date of filing: 30.09.2004
(51) Int. Cl.: C04B 41/52, C03C 17/34, B05D 7/00

(54) **Method and compositions for improving durability of coated or decorated ceramic substrates**

(30) Priority: 30.09.2003 US 507272 P; 29.09.2004 US 952652
(62) Divisional of application: 04809824.8
(71) Applicant: PPG Industries Ohio, Inc., Cleveland, OH 44111 (US)
(72) Inventor: Hart, Terence J., Pittsburgh, PA 15237-5105 (US); Hodek, Robert B., Sarver, PA 16055 (US); Nehmsmann, Louis J., Apollo, PA 15613 (US); Tang, Robert H., Murrysville, PA 15668 (US); Zhang, Yingchao C., Murrysville, PA 15668-2700 (US)
(74) Representative: Polypatent

(57) **Abstract**

Methods for coating a ceramic substrate with a colored composition, including at least one curable organic binder and at least one colorant, and a substantially clear coating composition are disclosed. The first applied coating further comprises a plurality of spacer particles.

## Description

The present invention relates to coating compositions and methods particularly suitable for coating ceramic substrates.

Glass and other ceramic containers utilized by the food and beverage industry are often coated with protective coatings and/or decorated with information such as the contents of the container or with fanciful markings or other indicia to identify the product and/or its source. In many countries, beverages such as beer and soda are marketed in returnable glass bottles. After the beverage has been consumed, the glass bottles are returned to the beverage filler. They are then cleaned, sterilized, refilled, relabeled, and sold again. Decals and paper labels have been used to decorate returnable beverage bottles. Both types of labels have many drawbacks. For example, both paper labels and decals are expensive, messy, and can easily come off upon exposure to water or other materials. In addition, many of the adhesives used in decals become sticky when subjected to the bottle cleaning process and can cause damage to machines, drains, and the like.

To avoid the problems associated with decals and paper labels, more permanent decorations have been applied to glass surfaces of returnable containers. These more permanent decorations are applied in the form of a paste containing finely ground particles of a glassy material (termed "frit") and a carrier, typically a volatile organic solvent or wax ("VOC"). After application of the paste to the glass surface by hot-melt screen printing or other application techniques, the glass is fired at high temperatures (650°C, for example) to volatilize and/or thermally decompose and drive off the carrier, fuse the frit, and bind the frit to the glass surface. In hot-melt screen printing, the frit or other printing material is applied to a heated screen in a desired pattern. The frit melts or softens and then is forced through the screen via a squeegee and is transferred to the substrate for firing. Pigments insensitive to such high temperatures are included in the paste to provide color to the composition. These pigments typically contain certain heavy metals, such as cadmium for producing red color, lead for white, and chromium for yellow. The VOC and the heavy metals associated with this type of decorating process are environmental hazards. The high temperature firing step requires considerable energy consumption and poses risks of injury to workers.

Efforts to avoid using organic solvents and heavy metals in coating and/or decorating ceramic containers and to reduce energy consumption involve the use of curable organic binder systems. Conventional organic pigments are dispersed in the curable binder system that is applied to the ceramic surface in a screen printing process operated under process and temperature conditions at which any curing agent is inactive. For thermally cured organic binders the decorated container is heated in an oven to a temperature that activates the curing agent to cure the binder but that does not degrade the pigment; this serves to fix the binder with pigment to the container. However, if the application of a second layer is desired, a subsequent screening application often peels the previously applied color layer from the container, or this color layer is otherwise damaged, resulting in defective product. If the first layer is cured or partially cured before the application of the second layer, peeling and other damage during application of subsequent layer(s) are avoided but with the significant detriment of process speed, efficiency and/or energy use.

Binders cured via UV radiation can be used to prepare multi-ink designs which avoid damage to underlying layers by curing (or partially curing) each ink layer prior to application of the next. However, this requires the installation of a UV curing station after each ink application station adding to the cost and complexity of the equipment.

Such coating compositions applied to bottles are often subjected to harsh physical and chemical environments. In particular, returnable bottles typically are subjected to repeated cycles of washing in caustic cleaning solutions. The underlying ceramic substrate is susceptible to degradation by such caustic cleaning solutions; weakening of the underlying substrate can cause the coating composition thereon to fall away from the substrate. This problem is exacerbated for coating compositions that are applied as decorations with fine details such as written material in a small type size. Fine lines sometimes are damaged or removed by repeated caustic washes even though large areas show no significant effect.

In manufacturing glass containers, a "hot end coating" is often applied to the newly formed containers that results in a thin film of tin oxide on the exterior of the containers. The presence of a tin oxide coating has been found to have a positive influence on the ability of organic decorations to withstand repeated caustic washes. However, tin oxide films do not yield the desired level of durability.

Accordingly, there is a need for compositions and methods for coating ceramic containers that provide excellent decorative effect, are cost competitive, minimize energy consumption and/or are resistant to harsh environments.

The present invention is directed to methods for coating ceramic substrates comprising applying to at least a portion of the substrate at least one colored coating composition comprising at least one curable organic binder and at least one colorant; applying to at least a portion of the substrate a substantially clear coating composition comprising a curable organic binder; and substantially simultaneously curing the binders in the colored coating composition and the substantially clear coating composition; wherein either the colored coating or the substantially clear coating can be applied first, and wherein the first applied coating further comprises a plurality of particles. Substrates coated according to these methods are also within the scope of the present invention.

The present invention is generally directed to methods for coating ceramic substrates. "Ceramic" refers to a wide range of substrates generally characterized as brittle, heat resistant, and/or formed from one or more non-metallic minerals, including but not limited to, pottery, earthenware, clay, whiteware, refractories, porcelain, glass ceramic and glass. The ceramic substrates can be glazed or unglazed, and can be in any shape, size or configuration.

The colored coating compositions of the present invention comprise at least one curable organic binder and at least one colorant. "Colorant" and like terms as used herein refers to any substance that imparts color and/or other opacity and/or other visual effects to the composition, such as dyes, pigments, tints and the like. Colorants may include, for example, finely divided solid powders, insoluble but wettable under the conditions of use. Color-imparting pigments are known to those of skill in the art, and a list of specific examples can be found in U.S. Patent No. 6,214,414. A single colorant or a mixture of two or more colorants may be used. Pigments that are resistant to high temperatures, such as those used in frit coatings and decorations and often containing heavy metals, can be used, but because high temperatures are not necessary in the present invention, pigments that do not have high temperature resistance can be used. Thus, heavy metal-containing pigments, which are often toxic, can be avoided without sacrificing appearance according to the present invention. One nonlimiting embodiment of the present invention specifically excludes heavy metals including chromium, cadmium, lead or cobalt. The colorant(s), when used, may comprise from 1 to 65 weight percent of the present compositions, such as from 3 to 40 weight percent or 5 to 35 weight percent, with weight percent based on the total weight of the compositions. Any pigments or dyes that are typically used in the paint industry can be used, such as titanium dioxide, carbon black, DPPBO red, phthalo green or blue, iron oxide, bismuth vanadate, napthol AS, anthraquinone, perylene, aluminum and quinacridone.

Other materials affecting the appearance of the compositions that may be used as colorants in the present invention include special effect pigments and/or special effect compositions that produce one or more effects such as reflectance, pearlescence, metallic sheen, phosphorescence, fluorescence, photochromism, thermochromism, and goniochromism. While such special effect pigments/compositions generally impart color to the compositions, some special effect pigments/compositions do not impart perceptible color to the compositions but provide other perceptible properties, such as visual properties, to the present compositions.

The substantially clear coating, like the colored coating, also comprises at least one curable organic binder, which can be the same or different as the curable organic binder(s) in the colored coating composition. "Substantially clear coating" and like terms refer to a coating that imparts little or no color to an underlying substrate or coating.

As noted above, the present invention is directed to methods for coating a ceramic substrate comprising applying two coating compositions to the substrate, a colored coating composition and a substantially clear coating composition. The coatings can be applied in either order; that is, colored followed by clear or clear followed by colored. The coating that is applied first, and optionally the coating that is applied second, further comprises a plurality of "spacer" particles. The particles can be organic, inorganic or combinations thereof, spherical, not spherical or combinations thereof. Organic particles can be polymeric, nonpolymeric or combinations thereof. The particles can be solid, hollow, or combinations thereof. Suitable inorganic particles are commercially available as inert fillers and may comprise, for example, glasses, including borosilicate glass and soda lime silica glass, and ceramics. Organic particles are also widely commercially available. Organic particles suitable for use in the present invention can comprise a wide variety of polymeric species and blends thereof; these particles can exhibit the combination of rigidity and thermal softening desired in certain embodiments as described below. Certain organic particles are particularly beneficial in achieving the desired level of gloss in certain embodiments because they readily soften and flow, resulting in a smooth, glossy surface. Examples of suitable polymeric materials include polyamides, polysiloxanes, polyacrylates, polyacrylamides, polystyrene, polyurethane and polyester. Nonlimiting examples of suitable polyamides include polyamide 12, polyamide 11, and polyamide 6/12. Coatings used according to the present invention can include organic particles that soften, and/or organic particles that may not possess the softening properties discussed below, and/or inorganic particles.

The particles may be rigid at or below a first temperature and soften at a higher second temperature at or below the temperature at which the binder(s) cure; the binder(s) remain uncured at the first temperature. Alternatively, the particles may be rigid at all relevant temperatures, i.e. they do not soften at or below the temperature at which the binder(s) cure and will not undergo any appreciable softening at the temperatures to which the substrate will be exposed during the coating steps described herein. The "non-softening" particles may be useful in achieving objectives such as surface texture, coefficient of friction, abrasion resistance and/or special reflectivity. The particles may be present at levels and ratios sufficient to exhibit a desired effect in the coating composition. "Rigid" and like terms mean that the particles are not readily compressible at a given temperature; that is, the particles have greater structural integrity than the uncured binder in which they are contained.

More specifically, the components of one or more of the compositions used are selected so that the binder(s) are uncured and the particles in the colored composition and/or the substantially clear coating composition are rigid at a first temperature. The first temperature will typically be the temperature at which the composition is applied to the substrate and/or the temperature at which a second or subsequent coating layer may be applied to the substrate. This may be room temperature, or it may be at somewhat elevated temperatures. In certain embodiments, the binder(s) cure and the particles soften at a second temperature. "Cure" and like terms refer to chemical reactions that link together the various components of the organic binder forming a thermoset polymer. "Soften" and like terms refer to the loss of sufficient rigidity of structure in the particles such that a deformation and/or other shape change occurs in the particles. For example, particles protruding from the surface of the compositions of the present invention change shape at or below the second temperature, "melting" or smoothing the coating surface; because of this smoothing, the gloss reduction normally observed when particles protrude through a coating surface is minimized if not eliminated. In other embodiments, one or more of the compositions used contain particles that maintain their rigidity and/or structural integrity at both the first and second temperatures.

In addition to temperature parameters, particles can be selected for use based on their solubility and/or wettability in the binder and/or remainder of the composition. Particles that are overly soluble in the binder may dissolve, swell or soften therein and not function as spacers at the printing temperature, or may otherwise result in undesired surface appearance. If the particles are not sufficiently wetted by the binder, a surface texture that may be undesirable in certain applications can result.

The particles can be spherical or non-spherical particles. The average size and distribution of particle sizes is chosen to maximize the spacer function and minimize any deleterious effect on appearance. Particle sizes vary according to the needs and desires of the user, and may have an average particle diameter of less than 1 micron. In certain nonlimiting embodiments, average particle diameters may be at least 1 micron, in other nonlimiting embodiments at least 3 microns, and average diameters of at least 5 microns have been found to be satisfactory in some nonlimiting embodiments. In certain embodiments, the size of the particle can typically be approximately the same size as the coating layer being deposited. If the particles are too small relative to the coating layer, they will not function as spacers and if they are too large, they may protrude, or too many may protrude, even after softening, from the surface and reduce the final gloss of the coating or decoration. Of course, this protrusion may be desired in certain embodiments, in which case the particle size and/or softening properties should be selected as appropriate. Selection of particle size may also be determined by the mesh size of the screen used in a hot-melt screen printing process. The screen may become plugged by particles that are too large to pass therethrough, which results in poor printing quality.

The binders used according to the present invention may be selected from any suitable organic coating compositions known in the art. These include compositions that contain an organic, resinous component, such as one that is capable of being applied to a ceramic substrate in a substantially liquid state and thereafter cured to a durable, hardened state. Cure can be accomplished by any means, such as heat, UV radiation, electron beam radiation or some other form of energy that causes the binder to cure. In certain embodiments, the binder includes one or two organic components that undergo a curing reaction when the curing energy is applied. In certain nonlimiting embodiments, the composition can comprise an epoxy resin and an amine curing agent (e.g., dicyandiamide) such as those disclosed in U.S. Patent No. 6,214,414, and in other nonlimiting embodiments of the invention, the binder can further include a blocked isocyanate curing agent, such as those disclosed in U.S. Patent No. 6,214,414, incorporated herein by reference. Other suitable resins include, for example, hydroxyl or carboxylic acid containing acrylic polymers, hydroxyl or carboxylic acid-containing polyester polymers, isocyanate or hydroxyl containing polyurethane polymers, amine or isocyanate containing polyureas, or any other hydroxy, carboxylic acid, amide, amine carbamate, isocyanate or epoxy functional polymers. Suitable curing agent(s) can be determined by one skilled in the art and may include one or more of aminoplasts, phenoplasts, polyepoxides, polyacids, isocyanates, polyols, polyamines, anhydrides, and carbodiimides. Combinations of binder(s) and/or curing agent(s) can be used.

In one nonlimiting embodiment, a polyepoxy-functional reactive organic resin may be used; "polyepoxy-functional" means that on a number average molecular weight basis, the resin contains, on average, more than one epoxy group per molecule or, on average, approximately two hydroxyl groups per molecule or more. In other nonlimiting embodiments, UV radiation or electron beam (EB) radiation can be used to initiate curing of suitably formulated binders that contain reactive functionality designed to thermoset upon exposure to the radiation. These include various free radical cure materials such as acrylates, vinyl functional materials, acrylated oligomers and polymers, and vinyl ether with unsaturated polyester. They can also be cationically initiated materials such as cycloaliphatic epoxy or vinyl ether. Suitable free radical or cationic photoinitiators are generally used with UV curing and are optional for EB curing. Combinations of free radical and cationic curing are also possible, as are combinations of the UV/EB cure processes with the thermal cure compositions described above.

In certain nonlimiting embodiments, the binders used in the present invention have or are adapted to have viscosities suitable for printing at temperatures of 60°C to 120°C; other temperatures can be used in other nonlimiting embodiments. For thermally cured systems, the curing mechanisms of the binders are selected so as to have little or no activation until they are subjected to the second temperature, at which the binder cures. In order to avoid premature curing, the difference between the first and second temperatures can be at least 30°C, and more typically greater than 50°C, although other temperature differences can be used within the present invention.

The curable organic binder(s) used in the one or more colored coating compositions and the curable organic binder(s) used in the substantially clear coating compositions can be the same or different. Similarly, if there are particles used in both the colored and substantially clear coating compositions, they can be the same or different.

In some applications, it is desirable that the coatings adhere to the ceramic substrate at a level that approaches or achieves a permanent coating on the substrate. Such high durability coatings are often desired for containers that undergo repeated caustic washing (e.g., in alkaline solutions) as is commonly employed by bottlers for cleaning returned bottles prior to refilling. The bottles may be treated with an adhesion promoter prior to application of the compositions of the present invention or the binder may include an adhesion promoter such as an organo-functional silane, siloxane or titanate.

In other applications, the coatings may be removed from the container after a limited number of return trips to the beverage bottler. For example, seasonal or holiday decorations may be placed on bottles during a promotional period and removed at the conclusion of the promotional period. The ceramic substrate may be treated with a release-enhancing composition prior to application of the coating compositions. One nonlimiting example of a composition for treating ceramic substrates to enhance release of the coating compositions of the present invention in a caustic wash is a polyethylene composition such as a polyethylene emulsion. The release-enhancing composition can be applied, for example, in a cold end coating process.

As noted above, the particles incorporated in the compositions of certain nonlimiting embodiments of the present invention are rigid at or below a first temperature. The particles have substantial structural rigidity at the temperatures at which the composition is applied to a surface, which in the case of hot-melt type compositions can be significantly elevated; in certain embodiments the particles will lose their structural distinctness at the temperatures used for curing the binder. The initial rigidity need not preclude all resiliency or plasticity, but is sufficient to provide structural integrity to an applied, uncured layer of the coating composition. This structural integrity permits applying subsequent layer(s) to the substrate without the need to cure each layer. In this manner, the particles function as "spacers" that retain the coating at substantially the desired location until cure. Because of the integrity of the prior-applied layer or layers, the invention permits two or more coating layers, such as coatings of different colors, or one or more colored coatings and one or more substantially clear coatings, to be applied without a curing step between the application of the different layers.

After all of the desired layers have been applied, curing energy may be applied to substantially cure all of the layers substantially simultaneously. "Substantially cure" and like phrases means that the binder is more than partially cured. "Substantially simultaneously curing" and like phrases refer to substantial curing of all coating layers in a single cure step.

For a typical commercial bottle decorating process that uses hot-melt screen printing temperatures ranging from 60°C to 120°C, and cure temperatures ranging from 150°C to 220°C, it has been found that particles of polyamide 12 are particularly suitable. Other polymer systems may be particularly suitable with different temperature ranges.

Typically, the binder will comprise 20 to 95 weight percent, with weight percent based on the total weight of the compositions. For colored coatings, the binder may range from 35 to 65 weight percent, for example, and for substantially clear coatings the binder may range from 50 to 95 weight percent, such as 65 to 95 weight percent or 75 to 95 weight percent. In certain nonlimiting embodiments, the relatively small sizes and amounts of particles in the coatings used in the present invention do not produce perceptible reflectivity. When particles are used, the particle content of the compositions is typically in the range of 5 to 50 weight percent, or 10 to 35 weight percent, or 15 to 30 weight percent, with weight percent based on total weight of the composition. The density, particle size and particle size distribution will determine the quantity appropriate to achieve satisfactory spacer function and the desired film appearance. For example, it will be appreciated that a greater weight percent of particles may be needed for particles that are relatively dense in order to achieve an effect similar to when less dense particles are used.

Reactive waxes can optionally be included in certain nonlimiting embodiments of the present invention. These are long-chain aliphatic substances that have at least one reactive group having an active hydrogen, usually selected from hydroxyl, amido, ureylene, carbamyl, and carbamyloxy, and which have the physical characteristics commonly associated with waxes. Stearyl alcohol is an example of a reactive wax that is commonly used, but many other compounds are known in the art. Reactive wax may optionally constitute up to 20 percent by weight of the composition, such as from 0.5 to 15 percent by weight of the compositions.

Certain nonlimiting embodiments of the present compositions may further include substantially clear and/or substantially colorless fillers, and are particularly suitable for use in the substantially clear composition. These fillers generally are finely divided particulate solids that impart little or no color to the final coatings (are "substantially colorless") and/or absorb little or no visible light (are "substantially clear"). They may be used in addition to the spacer particles of the present invention. The fillers usually have a maximum dimension of less than 500 nanometers, such as less than 100 nanometers, less than 50 nanometers, less than 20 nanometers or in the range of 5 to 20 nanometers. In certain nonlimiting embodiments, the fillers are hydrophobic. Examples of suitable hydrophobic fillers include AEROSIL fumed silicas designated R972, R974, R812, R812S, R805 (Degussa Corporation, Ridgefield Park, New Jersey). A substantially clear and/or colorless filler or a mixture of two or more substantially clear and/or colorless fillers may be used when desired. When present in certain embodiments of the colored compositions, the substantially clear and/or colorless filler(s) typically comprise from 0.01 to 20 percent by weight of the composition, such as from 1 to 10 percent, or 2 to 5 percent, while similar amounts can be added to the substantially clear coatings; for high gloss applications, it may be desirable to minimize inorganic additives.

Many other additional materials may be optionally used in the present compositions. Among these are antioxidants, degassing aids and flow modifiers. These are only exemplary; others may be used as desired. Other additives may be included for improving rheology, opacity, durability, lubricity, color brightness, and many other functions known to those of skill in the art. When present, the additional optional materials can be used in their customary amounts for their customary purposes. Typically, these additional optional materials, when present, will constitute from 0.01 to 15 weight percent of the coating compositions used in the present invention.

According to the present invention, two or more different coating layers are applied to a substrate, at least one of which is colored and at least one of which is substantially clear. A "coating layer" or a "decorating layer" generally refers to a single coating composition layer. A colored coating layer may impart a color of a label or other opacity or visual effect to the substrate; the substantially clear coating layer may impart a clear portion of a label or may be used over substantially all of the substrate, providing protection and/or durability to both the underlying and/or overlying coating layer(s) as well as the substrate itself. When a second coating layer is applied over, adjacent to, and/or spaced apart from a first coating layer, the particles in the first coating layer maintain the integrity of the uncured first layer by functioning as spacers. Thus, application of subsequent coating layers on top of, adjacent to and/or spaced apart from the previously applied coating layers does not disturb the previously applied coating layers. The last layer to be applied may also contain the particles, but since it is not subjected to the rigors of a subsequent printing operation, it need not include the particles.

In certain embodiments, at least one colored coating composition as described above is applied to a ceramic substrate. A colored coating composition may be applied to at least a portion of the substrate or onto at least a portion of a coating layer previously applied to the substrate. The colored coating(s) may be applied in the form of discrete words or designs on the substrate, or can cover large portions or all or substantially all of the substrate. The substantially clear coating can be applied as a clear overcoating covering at least a portion of the colored layer(s).

In certain nonlimiting embodiments, one or more substantially clear layer(s) may be used as an initial coating on the substrate. When applied as the initial coating, the substantially clear coating further comprises a plurality of spacer particles. One or more colored coatings can then be applied over all or part of the clear coating. This arrangement also can reduce or eliminate degradation of the colored coating composition because the underlying substantially clear composition may serve as a barrier between the ceramic substrate and the colored coating compositions. A second substantially clear coating can then be applied over all or part of one or more colored coating layers. The second substantially clear coating can be the same or different from the first substantially clear coating. In one embodiment, the spacer particles are excluded in the overcoating or top-most composition, be it colored or clear, so as to maximize its gloss and clarity.

The substantially clear coating composition is particularly suited for improving the durability of the colored coating composition(s) and may be applied over at least a portion of the colored coating composition(s) or under at least a portion of the colored coating composition(s) or both. For example, an underlying colored coating composition containing spacer particles may be applied to the ceramic substrate and a substantially clear coating composition is applied thereover. The extent of coverage of the underlying coating composition(s) by the substantially clear coating composition may vary. In one embodiment, the substantially clear coating composition covers substantially all of the article to which the coatings are applied, e.g., the entire glass bottle. However, because degradation of the underlying coating compositions typically occurs at the edges of the underlying coating composition (i.e., at the interface between the ceramic substrate and the underlying coating composition), the substantially clear coating composition may cover the edges of the underlying coating composition thereby also covering a portion of the ceramic substrate adjacent thereto. For underlying colored coating composition(s) applied in fine detail such as in the form of printing or fine lines, it may be simpler to cover the entire underlying coating composition(s) with a substantially clear coating. In these embodiments where the substantially clear coating composition is applied to a portion of the article, less than 50 percent of the surface area of the ceramic substrate, or less then 25 percent of the surface area, and in other cases even less than 10 percent of the surface area of the ceramic substrate may be covered by the substantially clear coating composition. The substantially clear coating composition may be applied using the same or different techniques used to apply the underlying coating composition(s). When applied to the substrate before any colored layer(s), the substantially clear coating provides durability to overlying any colored layer(s). In these embodiments, the substantially clear layer provides protection at the interface of the colored layer and substrate from caustic attack.

The order of application of the coatings (colored and substantially clear) depends on the desired features of the final product including any design or other indicia applied thereto and the desired degree of protection from the environment by the substantially clear coating composition.

In accordance with the present invention, a multi-colored, organic decoration can be applied to a ceramic substrate in a plurality of printing steps in rapid succession. Each coating layer can be the same or different as other coating layer(s). After all the coating layers have been applied, the coated substrate is heated to an elevated temperature to cure all of the applied coating layers substantially simultaneously. In compositions that include blocked isocyanates, curing of one or more of the applied coating compositions is accomplished at temperatures sufficiently to unblock the polyisocyanates. With amine-cured epoxy based systems, curing temperatures in typical commercial bottle decorating operations are usually at least 150°C and may be as high as 200°C. The curing temperature should not be so high as to cause unwanted coloration or other thermal degradation of the coatings. Different curing temperatures will be applicable for other resin systems or other processes. In certain nonlimiting embodiments, two or more compositions as described herein are applied to at least a portion of the substrate and the compositions are substantially simultaneously cured at temperatures at or below 325°C.

As noted above, according to the methods of the present invention, coating composition(s) may be applied to an undecorated ceramic substrate and/or to a substrate that has had one or more previously applied coating layers. In the latter situation, it will be appreciated that the subsequent coating layer may be applied directly to the substrate, at least partially over one or more other coating layers, or some combination thereof; "applying to at least a portion of the substrate" and like terms encompass all of these alternatives since all decorating layers are ultimately being applied to the substrate. Usually, the layers are applied at elevated temperatures so that the chilling effect of the cooler substrate will quickly substantially solidify the coating layer. Such solidification is helpful in maintaining fine-line definition, in permitting application of multiple layers without impairing the definition of any previously applied layer, and/or in permitting application of multiple layers without having to cure each layer separately. In certain nonlimiting embodiments, it may be desired for the application temperature of a subsequently applied layer to be lower than the temperature at which a previously applied coating will liquefy or unduly soften. This enhances preservation of the fine-line definition and resolution of the previously applied decorating layer. The present methods are particularly suitable for applying brand indicia to glass bottles, or in any other application in which definition, such as with lettering, is particularly desired.

The compositions used according to the present invention generally rapidly solidify to the touch after application. As such, they can be advantageously used in decorating lines operating at high speeds where bottles or other ceramic substrates are sequentially coated.

The present invention is typically described herein using application by hot-melt screen printing. It will be appreciated that the present invention includes any process for applying a coating such as spraying, curtain coating, roller application, printing, or brushing.

Substrates coated according to the present invention may be hot end coated to form a tin oxide film underlying the coating compositions. However, acceptable durability is achievable using the present invention even when the amount of tin oxide film is less than what would ordinarily be considered optimum.

The articles produced according to the present invention may also be cold end coated with an organic lubricant coating such as polyethylene to enhance mechanical abrasion resistance.

As used herein, unless otherwise expressly specified, all numbers such as those expressing values, ranges, amounts or percentages may be read as if prefaced by the word "about", even if the term does not expressly appear. Any numerical range recited herein is intended to include all sub-ranges subsumed therein. Plural encompasses singular and vice versa. Also, as used herein, the term "polymer" is meant to refer to prepolymers, oligomers and both homopolymers and copolymers; the prefix "poly" refers to two or more.

### EXAMPLES

The invention is further described with the following examples, which are to be considered illustrative rather than limiting, and in which all parts are parts by weight and all percentages are percentages by weight unless otherwise specified. The following materials were used in the examples:
EPON 880 bisphenol A diglycidyl ether, Resolution Performance Products, Houston, Texas.
EPON 1001 F bisphenol A diglycidyl ether, Resolution Performance Products, Houston, Texas.
VESTAGON B 1400, blocked polyisocyanate believed to be an adduct of isophorone diisocyanate, 1,1,1-trimethylolpropane, and ε-caprolactam in a 3:1:3 molar ratio, Degussa AG, Coatings and Colorants, Marl, Germany.
TI-PURE R-706 titanium dioxide pigment, E.I. du Pont de Nemours & Co., Wilmington, Delaware.
NEO GEN DGH aluminum silicate, Dry Branch Kaolin Co., Dry Branch, Georgia.
SPHERICEL 110P8 hollow borosilicate glass microspheres, 11.7 microns mean diameter, Potters Industries, Inc., Valley Forge, Pennsylvania.
MODAFLOW Powder III flow modifier - ethyl acrylate-2-ethylhexyl acrylate copolymer with silicon dioxide, Solutia Inc., St. Louis, Missouri.
UVITEX OB whitening agent, 2,2'-(2,5-thiophenediyl)bis[5-(1,1-dimethylethyl)]-benzoxazole, Ciba Specialty Chemicals, Basil, Switzerland.
BYK-405 rheology control agent, solution of polyhydroxycarboxylic acid amides, BYK-Chemie, Wesel, Germany.
DYHARD 100M dicyandiamide, micronized 98% <40 microns, SKW Trostberg Aktiengesellschaft, Trostberg, Germany.
AEROSIL R974 hydrophobic fumed silica, Degussa AG, Frankfort am Main, Germany.
ORGASOL 1002 D NAT 1 polyamide 6 powder, 20 micron average particle diameter, Atofina Chemicals, Philadelphia, Pennsylvania.
ORGASOL 2001 UD NAT 1 polyamide 12 powder, 5 micron average particle diameter, Atofina Chemicals, Philadelphia, Pennsylvania.
VESTOSINT 2070 polyamide 12 powder, 5 micron average diameter, Degussa AG, Marl, Germany.
DOVERPHOS S-680 distearyl pentaerythritol diphosphite antioxidant from Dover Chemical Corporation, Dover, Ohio.
FLUORAD Fluorosurfactant FC 4430 non-ionic polymeric surfactant from 3M Specialty Materials, St. Paul, Minnesota.
INTERPROME 4049 azo based naphthol red colorant from Sino, P.R. China.
INTERPROME 4047 pigment from Sino, P.R. China.

### Example 1

A white decorating composition in accordance with one embodiment of the present invention was prepared using organic particles (VESTOSINT 2070 polyamide 12 powder). The materials of Charge 1 were mixed at 80°C to 110°C until homogenous. The materials of Charge 2 were introduced into the mixture of Charge 1 and mixed for one hour at 80°C to 110°C to give a white homogenous paste. The resulting white decorating composition was poured into a container and allowed to cool to room temperature to yield a solid coating composition.

| **Component** | **(Weight, g)** | **%wt** |
|---|---|---|
| **Charge 1** | | |
| EPON 880 | 50.00 | 25.08 |
| EPON 1001 F | 60.00 | 30.10 |
| Stearyl alcohol | 10.00 | 5.02 |

| **Charge 2** | | |
|---|---|---|
| TiO₂ | 32.00 | 16.05 |
| Blue Dye | 0.1355 | 0.07 |
| Violet Dye | 0.9184 | 0.46 |
| DOVERPHOS S-680 | 1.01 | 0.51 |
| VESTOSINT 2070 | 32.53 | 16.32 |
| MODAFLOW Powder III (65%) | 4.00 | 2.01 |
| UVITEX OB | 1.00 | 0.50 |
| DYHARD 100M | 7.73 | 3.88 |

### Example 2

A white decorating composition in accordance with one embodiment of the present invention was prepared, using a combination of organic particles (VESTOSINT 2070 polyamide 12 powder) and inorganic particles (SPHERICEL 110P8 glass beads). The materials of Charge 1 were mixed at 80°C to 110°C until homogenous. The materials of Charge 2 were introduced into the mixture of Charge 1 and mixed for one hour at 80°C to 110°C to give a white homogenous paste. The resulting white decorating composition was poured into a container and allowed to cool to room temperature to yield a solid coating composition.

| **Component** | **Weight, g** | **%wt** |
|---|---|---|
| **Charge 1** | | |
| EPON 880 | 45.00 | 21.72 |
| EPON 1001 F | 65.00 | 31.37 |
| Stearyl alcohol | 20.00 | 9.65 |

| **Charge 2** | | |
|---|---|---|
| TiO₂ | 32.00 | 15.45 |
| Blue Dye | 0.1350 | 0.07 |
| Violet Dye | 0.9180 | 0.44 |
| SPHERICEL 110P8 | 10.00 | 4.83 |
| DOVERPHOS S-680 | 1.04 | 0.50 |
| VESTOSINT 2070 | 20.71 | 10.00 |
| MODAFLOW Powder III (65%) | 4.00 | 1.93 |
| UVITEX OB | 1.00 | 0.48 |
| DYHARD 100M | 7.37 | 3.56 |

### Example 3

A white decorating composition in accordance with one embodiment of the present invention was prepared using organic particles (ORGASOL 2001 UD NAT1 polyamide 12 powder). The materials of Charge 1 were mixed at 80°C to 110°C until homogenous. The materials of Charge 2 were introduced into the mixture of Charge 1 and mixed for one hour at 80°C to 110°C to give a white homogenous paste. The resulting white decorating composition was poured into a container and allowed to cool to room temperature to yield a solid coating composition.

| **Component** | **Weight, g** | **%wt** |
|---|---|---|
| **Charge 1** | | |
| EPON 880 | 50.00 | 25.66 |
| EPON 1001F | 55.00 | 30.79 |
| Stearyl alcohol | 10.00 | 5.13 |

| **Charge 2** | | |
|---|---|---|
| TiO₂ | 32.00 | 16.42 |
| Blue Dye | 0.14 | 0.07 |
| Violet Dye | 0.92 | 0.47 |
| DOVERPHOS S-680 | 0.98 | 0.50 |
| ORGASOL 2001 UD NAT1 | 28.12 | 14.43 |
| MODAFLOW Powder III (65%) | 4.00 | 2.05 |
| UVITEX OB | 1.00 | 0.51 |
| DYHARD 100M | 7.73 | 3.96 |

### Example 4

A white decorating composition was prepared incorporating only inorganic particles (SPHERICEL 110P8 hollow glass microspheres). The materials of Charge 1 were mixed at 80°C to 110°C until homogenous. The materials of Charge 2 were introduced into the mixture of Charge 1 and mixed for one hour at 80°C to 110°C to give a white homogenous paste. The resulting white decorating composition was poured into a container and allowed to cool to room temperature to yield a solid coating composition.

| **Component** | **Weight, g** | **%wt** |
|---|---|---|
| **Charge 1** | | |
| EPON 880 | 50.00 | 25.08 |
| EPON 1001F | 60.00 | 30.10 |
| Stearyl alcohol | 10.00 | 5.02 |

| **Charge 2** | | |
|---|---|---|
| TiO₂ | 32.00 | 16.05 |
| SPHERICEL 110P8 | 32.53 | 16.32 |
| MODAFLOW Powder III | 4.00 | 2.01 |
| UVITEX OB | 1.00 | 0.50 |
| DYHARD 100M | 7.73 | 3.88 |
| DOVERPHOS S-680 | 1.01 | 0.51 |
| Blue Dye | 0.1355 | 0.07 |
| Violet Dye | 0.9184 | 0.46 |

### Example 5

A red decorating composition was prepared for overprinting onto the white decorations of Examples 1 through 4. The decorating composition did not include the particles, since it was applied as a subsequent decorating layer. The materials of Charge 1 were mixed at 80°C to 110°C until homogenous. The mixture was further mixed at 80°C to 110°C for one hour to produce a red homogenous paste. The resulting red decorating composition was poured into a container and allowed to cool to room temperature to yield a solid coating composition.

| **Component Weight, g** | | **%wt** |
|---|---|---|
| **Charge 1** | | |
| EPON 880 | 55.00 | 36.89 |
| EPON 1001 F | 45.00 | 30.19 |
| Stearyl alcohol | 10.00 | 6.71 |
| VESTAGON B1400 | 10.00 | 6.71 |

| **Charge 2** | | |
|---|---|---|
| INTERPROME 4049 | 4.00 | 2.69 |
| INTERPROME 4047 | 8.00 | 5.36 |
| TiO₂ | 3.00 | 2.01 |
| Fluorosurfactant FC 4430 | 0.50 | 0.34 |
| MODAFLOW Powder III | 3.00 | 2.01 |
| DOVERPHOS S 680 | 0.74 | 0.50 |
| BYK 405 | 0.56 | 0.38 |
| DYHARD 100M | 7.88 | 5.29 |
| AEROSIL R974 | 1.40 | 0.94 |

This red ink was successfully printed over each of the prior white ink examples using a Strutz 150 decorating machine as part of the typical multi-ink application process. The resulting bottle decorations, when cured in a single-step baking process for 45 minutes at 350°F, provided acceptable appearance and film performance properties.

### Example 6

### Gloss Measurement

The white compositions prepared in Examples 1 through 4 were printed as a design on glass bottles using a Strutz GP-4 Semi-Automatic General Purpose Decorator. A stainless steel screen of 180 mesh was used and the white decorating compositions were printed at temperatures in the range of from 80°C to 85°C. The printed bottles were subsequently cured in a forced air oven at 180°C for one hour. The surface gloss of the decoration was determined by a Novo-Curve small area glossmeter (from Rhopoint Instrumentation Ltd., East Sussex, United Kingdom), which is adapted to carry out the procedure of ASTM D523 and is reported in Table 1. The surface gloss of the compositions of the present invention (Examples 1-3) was greater than that of Example 4.

**TABLE 1**

| **Example** | **Gloss, 60°** |
|---|---|
| 1 | 43 |
| 2 | 34 |
| 3 | 37 |
| 4 | 23 - 28 |

### Example 7

A 250 mesh white decorating composition was produced as in Example 2 having organic particles and inorganic particles with the following components:

| **Component** | **Weight, g** | **%wt** |
|---|---|---|
| Epon 880 | 50.00 | 25.5 |
| Epon 1001F | 55.00 | 28.1 |
| Stearyl alcohol | 10.00 | 5.1 |
| Epon 1001 F | 5.00 | 2.6 |
| R-706 TiO₂ | 32.00 | 16.3 |
| Colorant | 0.1355 | 0.1 |
| Colorant | 0.9184 | 0.5 |
| Sphericel 110P8 | 10.00 | 5.1 |
| Doverphos S-680 | 1.01 | 0.5 |
| Vestosint 2070 | 20.02 | 10.2 |
| Modaflow powder III (65%) | 4.00 | 2.0 |
| Dyhard 100M | 7.73 | 3.9 |
| Aerosil R974 | 1.00 | 0.5 |
| Total | 196.8 | 100.0 |

A 250 mesh substantially clear coating composition in accordance with one embodiment of the present invention was prepared having the following components:

| **Component** | **Weight, g** | **%wt** |
|---|---|---|
| Epon 1001 F | 40.00 | 41.6 |
| Epon 880 | 40.00 | 41.6 |
| Stearyl Alcohol | 10.00 | 10.4 |
| Modaflow | 1.00 | 1.0 |
| BYK 405 | 0.20 | 0.2 |
| Dyhard 100S | 4.37 | 4.5 |
| Aerosil R-974 | 0.50 | 0.5 |

Soft drink bottles (250 ml capacity) were heated for 7 hrs at 325°C to remove any preexisting polyethylene coating. All of the heat cleaned bottles were decorated with the white decorating composition as in Example 5 using a stainless steel screen of 250 mesh. Half of the white decorated bottles were coated using a stainless steel screen of 250 mesh with the substantially clear coating composition over the white ink decorated area (the "Clear Coat" examples) and the other half were not given a clear coat (the "Control" examples). The two compositions were cured in a single-step baking process as in Example 5. Half of each group of bottles were subsequently sprayed with a polyethylene cold end coating ("With CEC") and the other half were given no cold end coating ("No CEC").

The coated bottles were subjected to accelerated caustic conditions and tested for loss of the white decorating composition as follows. Three coated bottles filled with cold water were immersed for 7 minutes in a 70°C agitated caustic bath of 2.5 wt.% NaOH, 0.3 wt.% DiversyLever Anti-Etch agent, and 50 ppm CaCO₃. The bottles were removed from the bath for examination. Any loss of small lettering was considered as a failure of the whole set. The bottles were then emptied and refilled with cold water, and the testing cycle was repeated until a failure was observed. The data reported in Table 2 demonstrates that the durability of the white decorating composition is significantly enhanced by use of an overcoating of the substantially clear coating composition as compared to bottles decorated with the white compositions with or without a polyethylene CEC. This data also indicates that a polyethylene CEC applied to the bottles having the substantially clear coating composition had no effect on durability of the white decorating composition.

**TABLE 2**

| **Testing Cycle(s)** | **Control No CEC** | **Control With CEC** | **Clear Coat No CEC** | **Clear Coat With CEC** |
|---|---|---|---|---|
| 1-9 | pass pass pass | pass pass pass | pass pass pass | pass pass pass |
| 10 | pass pass fail | pass pass pass | pass pass pass | pass pass pass |
| 11-24 | | pass pass pass | pass pass pass | pass pass pass |
| 25 | | pass pass fail | pass pass pass | pass pass pass |
| 26-45 | | | pass pass pass | pass pass pass |
| 46 | | | pass pass pass | pass pass fail |
| 47 | | | pass fail fail | |

Although the present invention has been described with reference to specific details of certain embodiments thereof, it is not intended that such details should be regarded as limitations upon the scope of the invention except insofar as they are included in the accompanying claims.

Aspects:
1. A method for coating a ceramic substrate comprising:
   applying to at least a portion of the substrate at least one colored coating composition comprising at least one curable organic binder and at least one colorant;
   applying to at least a portion of the substrate a substantially clear coating composition comprising a curable organic binder; and
   substantially simultaneously curing the binders in the colored coating composition and the substantially clear coating composition; wherein either the colored coating composition or the substantially clear coating composition can be applied first, and wherein the first applied coating composition further comprises a plurality of particles.
2. The method of Aspect 1, wherein the colored coating composition(s) are applied first.
3. The method of Aspect 1, wherein the substantially clear coating composition is applied first.
4. The method of Aspect 2, wherein the substantially clear coating composition is applied over substantially all of the colored coating composition(s).
5. The method of Aspect 2, wherein the substantially clear coating composition is applied only at the edges of the colored coating composition(s).
6. The method of Aspect 1, wherein the first applied coating composition further comprises a plurality of particles that are rigid at or below a first temperature and that soften at a second temperature at or below the temperature at which the binder(s) cure.
7. The method of Aspect 1, wherein the first applied coating composition further comprises a plurality of particles that do not soften at or below the temperature at which the binder(s) cure.
8. The method of Aspect 1, wherein each of the colored coating composition(s) and the substantially clear coating composition further comprise a plurality of particles, wherein the binder(s) in each of the coating compositions is the same or different and the plurality of particles in each of the coating compositions are the same or different.
9. The method of Aspect 8, wherein the particles are rigid at or below a first temperature and that soften at a second temperature at or below the temperature at which the binders cure.
10. The method of Aspect 6, wherein the difference between the first temperature and the second temperature is at least 30°C.
11. The method of Aspect 9, wherein the difference between the first temperature and the second temperature is at least 30°C.
12. The method of Aspect 8, wherein at least some of the particles comprise an organic material.
13. The method of Aspect 12, wherein the organic material is a polyamide.
14. The method of Aspect 1, wherein at least one of the curable organic binders comprise a polyepoxy-functional reactive resin.
15. The method of Aspect 14, wherein the curable organic binder(s) further comprise an amino-functional curing agent.
16. The method of Aspect 15, wherein the curable organic binder(s) further comprises a blocked polyisocyanate.
17. The method of Aspect 1, wherein said applying steps comprise hot-melt screen printing the compositions onto the substrate.
18. The method of Aspect 1, wherein the colorant comprises an organic pigment.
19. The method of Aspect 1, wherein the colorant comprises an inorganic pigment.
20. The method of Aspect 1, wherein the colorant comprises a special effect pigment.
21. The method of Aspect 1, wherein the ceramic substrate is glass.
22. The method of Aspect 6, wherein the ceramic substrate is glass.
23. A ceramic substrate coated according to the method of Aspect 1.
24. A ceramic substrate coated according to the method of Aspect 2.
25. A ceramic substrate coated according to the method of Aspect 3.
26. A ceramic substrate coated according to the method of Aspect 6.
27. The method of Aspect 1, further comprising treating the substrate with a composition for enhancing the releasability of the cured compositions from the substrate, prior to application of the coating compositions.
28. The method of Aspect 3, further comprising applying to at least a portion of the substrate a second substantially clear coating composition over at least a portion of the one or more colored coating compositions.

## Claims

1. A method for coating a ceramic substrate or glass substrate comprising:
- applying to at least a portion of the substrate at least one colored coating composition comprising 20 to 95 wt.-%, based on the total weight of the composition, of at least one curable organic binder and 1 to 65 wt.-%, based on the total weight of the composition, of at least one colorant;
- applying to at least a portion of the substrate a substantially clear coating composition comprising a curable organic binder; and
- substantially simultaneously curing the binders in the colored coating composition and the substantially clear coating composition;
wherein either the colored coating composition or the substantially clear coating composition can be applied first, and wherein the first applied coating composition further comprises 5 to 50 wt.-%, based on the total weight of the composition, of a plurality of particles having an average particle diameter of at least 1 micron, and
wherein the at least one curable organic binder comprises a resin selected from the group consisting of hydroxyl or carboxylic acid containing acrylic polymers, hydroxyl or carboxylic acid-containing polyester polymers, isocyanate or hydroxyl containing polyurethane polymers, amine or isocyanate containing polyureas, or any other hydroxy, carboxylic acid, amide, amine carbamate, isocyanate, epoxy functional polymers, and combinations thereof, or a polyepoxy-functional reactive resin.

2. The method of Claim 1, wherein the colored coating composition(s) are applied first, and, optionally, wherein the substantially clear coating composition is applied over substantially all of the colored coating composition(s) or wherein the substantially clear coating composition is applied only at the edges of the colored coating composition(s).

3. The method of Claim 1, wherein the substantially clear coating composition is applied first, and, optionally, further comprising applying to at least a portion of the substrate a second substantially clear coating composition over at least a portion of the one or more colored coating compositions.

4. The method of Claim 1, wherein the first applied coating composition further comprises a plurality of particles that are rigid at or below a first temperature and that soften at a second temperature at or below the temperature at which the binder(s) cure, or wherein the first applied coating composition further comprises a plurality of particles that do not soften at or below the temperature at which the binder(s) cure.

5. The method of Claim 1, wherein each of the colored coating composition(s) and the substantially clear coating composition further comprise a plurality of particles, wherein the binder(s) in each of the coating compositions is the same or different and the plurality of particles in each of the coating compositions are the same or different.

6. The method of Claim 5, wherein the particles are rigid at or below a first temperature and that soften at a second temperature at or below the temperature at which the binders cure.

7. The method of Claim 4 or 6, wherein the difference between the first temperature and the second temperature is at least 30°C.

8. The method of Claim 5, wherein at least some of the particles comprise an organic material, wherein the organic material is preferably a polyamide.

9. The method of any of the preceding Claims, wherein the curable organic binder(s) further comprise a curing agent selected from the group consisting of aminoplasts, phenoplasts, polyepoxides, polyacids, isocyanates, polyols, polyamines, anhydrides, and carbodiimides, and combinations thereof.

10. The method of Claim 1, wherein the at least one curable organic binder comprises an epoxy resin and an amine curing agent, preferably dicyandiamide as curing agent, and, optionally, wherein the at least one curable organic binder further includes a blocked isocyanate curing agent.

11. The method of Claim 1, wherein at least one of the curable organic binders comprise a polyepoxy-functional reactive resin, and, optionally, wherein the curable organic binder(s) further comprise an amino-functional curing agent and, further optionally, a blocked polyisocyanate.

12. The method of Claim 1, wherein said applying steps comprise hot-melt screen printing the compositions onto the substrate.

13. The method of Claim 1, wherein the colorant comprises a pigment selected from an organic pigment, an inorganic pigment and a special effect pigment.

14. The method of Claim 1, further comprising treating the substrate with a composition for enhancing the releasability of the cured compositions from the substrate, prior to application of the coating compositions.

15. A coated ceramic substrate obtainable by the method of any of the preceding Claims.
